# EUROPEAN PATENT APPLICATION

(11) **EP 0 836 806 A1**
(43) Date of publication of application: **22.04.1998**
(21) Application number: 97203152.0
(22) Date of filing: 10.10.1997
(51) Int. Cl.: A23K 1/00, A23K 1/10, A23K 1/14, A23N 17/00

(54) **Method and apparatus for converting wet organic wasted into animal feed**

(30) Priority: 10.10.1996 NL 1004243
(71) Applicant: NV Afvalzorg Noord-Holland, 2012 JJ Haarlem (NL)
(72) Inventor: Odekerken, Gabriel Cornelis Maria Nicolaas, 6721 DM Bennekom (NL); Poelen, Johannus Gerardus Maria, 6562 KN Groesbeek (NL); Reeuwijk, Anthonius Franciscus Adrianus, 6915 XS Lobith (NL)
(74) Representative: Van Breda, Jacobus

(57) **Abstract**

The invention relates to a method of converting wet organic wastes into animal feed, in which the wastes are subjected to the following treatment: at least partial dewatering of the wastes to a moisture content of at least about 50%, sterilization of the dewatered wastes by means of heating the wastes to a temperature above 100°C, and dehydration of the sterilized and at least partially dewatered wastes. During sterilization the wastes are heated for at least about 10 minutes to at least 125°C.

## Description

The invention relates to a method and apparatus for the conversion of wet organic wastes into animal feed.

Wet organic wastes become available with the preparation of meals in the private sphere and also as leftovers from the preparation of meals in large-scale kitchens. These organic wastes contain much moisture and are therefore susceptible to putrefaction. This is still more so if the waste includes fish and meat residues. Other wet organic wastes become available with the production of food stuffs and as agrarian waste from market gardening and auctions.

Until a few years ago, the collection and processing of these streams of organic wastes was taken care of by waste food collectors. The collected wastes were used as animal feed for feeding pigs without being further processed. With the disappearance of the waste food collectors this common possibility of converting wet organic wastes into animal feed was lost to be replaced by other ways of organic wastes removal. Among these are: dumping, incineration, composting and discharge into the sewer.

However, the organic wastes in question comprise various high grade nutrients which, in principle, make these wastes suitable for conversion into animal feed. Two kinds of processing methods are known for this purpose, namely steaming and dehydration. With steaming the organic wastes are heated by means of steam, thereby killing germs. The product obtained is sold to cattle farmers in the form of a slurry, who mix said product with other base materials to the desired animal feed composition. With treatment by means of dehydration, the water component in the organic wastes evaporates and germs are killed. The dry end product together with other dry base materials is converted into the desired animal feed product. Treatment by means of steam has the disadvantage that the end product has the same high moisture content as the collected wet organic wastes. This requires a large storage capacity for the ready product, transport costs for the removal of the product are high and the product is susceptible to fresh infection through germs and to contamination through toxic substances secreted by fresh fungal growth. The prevention of infection demands quick processing of the material. Treatment by means of dehydration affords greater flexibility because the product can be stored better. Due to the absence of water, the product takes up considerably less space and can be stored for a longer period of time. This makes the product also interesting for the production of domestic animal feed. Due to the absence of water, transport is considerably more efficient and less of a burden on the environment. Transport over longer distances becomes cost-effective. However, the disadvantage of dehydration is that evaporation consumes much energy.

From the German Offenlegungsschrift DE-A-195 03 228 a method is known of converting wet organic wastes into animal feed, in which the wastes are subjected to the following treatment: at least partial dewatering of the wastes to a moisture content of at least 50%, sterilization of the dewatered wastes by means of heating the wastes to a temperature above 100°C, and dehydration of the sterilized and at least partially dewatered wastes.

It is the objective of the invention to provide a method and apparatus for processing wet organic wastes which may be used more safely in the production of animal feed so that the development of diseases among the livestock may be prevented.

To this end the method according to the invention is characterized in that during sterilization the wastes are heated for at least about 10 minutes to at least 125°C.

As the wastes are already partially dewatered, heating for sterilization only requires a limited amount of energy. The invention also provides other advantages; these will be further elucidated below.

It is possible to dewater the wastes in a screw press. Preferably, however, dewatering of the wastes is carried out in a dewatering device of the step-screen kind such as, for instance, the device marketed by Hydropress Wallanders & Co AB in Sweden. This form of dewatering requires much less energy than the thermic dehydration process according to the prior art.

An apparatus for carrying out the method according to the invention is also known from DE-A-195 03 228. Said apparatus comprises, in the order of the processing steps to which the wastes are subjected, a dewatering device, a sterilization device and a dehydration device. As dewatering device the use of a centrifuge is suggested.

Conceivably the dewatering device may also be a screw press comprising a shaft around which spirally mounted a platform is provided, housed in a liquid-permeable jacket, and the shaft diameter increasing in the feed-through direction of the screw press. Due to the increasing shaft diameter, the wastes are gradually compressed in the feed-through direction, whereby the watery fraction is able to drain through the liquid-permeable jacket. In another alternative embodiment the dewatering device may still be a screw press comprising a shaft around which spirally mounted a platform is provided whose pitch decreases in the feed-through direction of the screw press.

In a preferred embodiment of the apparatus according to the invention the dewatering device, however, still comprises a dewatering device of the step-screen kind, such as the above-mentioned device from Hydropress Wallanders & Co AB in Sweden.

An energy-optimal method of dehydration is obtained in accordance with the invention by using as dehydration device a paddle dryer into which preheated air is introduced during operation. Advantageously, said preheated air may be obtained from a closed space accommodating the sterilization apparatus. In this way the heat losses occurring during the operation of the sterilization apparatus are usefully employed.

In another aspect of the invention the dehydration device in operation is fed with a mixture of wastes from the sterilization apparatus and a return stream from the dehydration device, formed by a fraction of the discharge from the dehydration device. The mixture fed to the dehydration device should then have an approximate dry matter content of at least 45-50%. In this way a suboptimal phase in the dehydration process is passed over. Dehydration progresses very slowly in the 25% to 45% dry matter range, probably because a fatty layer is formed at the surface of the sticky mass, hindering the evaporation of water. A dry matter content of above 50% allows the mass to rupture ever more easily. Because the surface is constantly rupturing, the fat is prevented from forming a continuous evaporation barrier.

Furthermore it is desirable that the sterilization apparatus comprises a jacketed pipe, that the pipe is receivingly coupled with the dewatering device, and that during operation a heat-containing medium is conducted between the pipe and the surrounding jacket. In this manner the wastes being processed are kept separate from the surroundings, completely preventing any possible contamination. The heat-containing medium may, for instance, be steam.

For the final treatment of the sterilized wastes, the apparatus according to the invention provides a dehydration device of the kind discussed above. The sterilization apparatus is provided with a controlled efflux device for supplying the wastes processed in the sterilization apparatus to the dehydration device. This allows the wastes in the sterilization apparatus during sterilization to be maintained at a desirable pressure of 3 bars, and the apparatus still to be operated continuously.

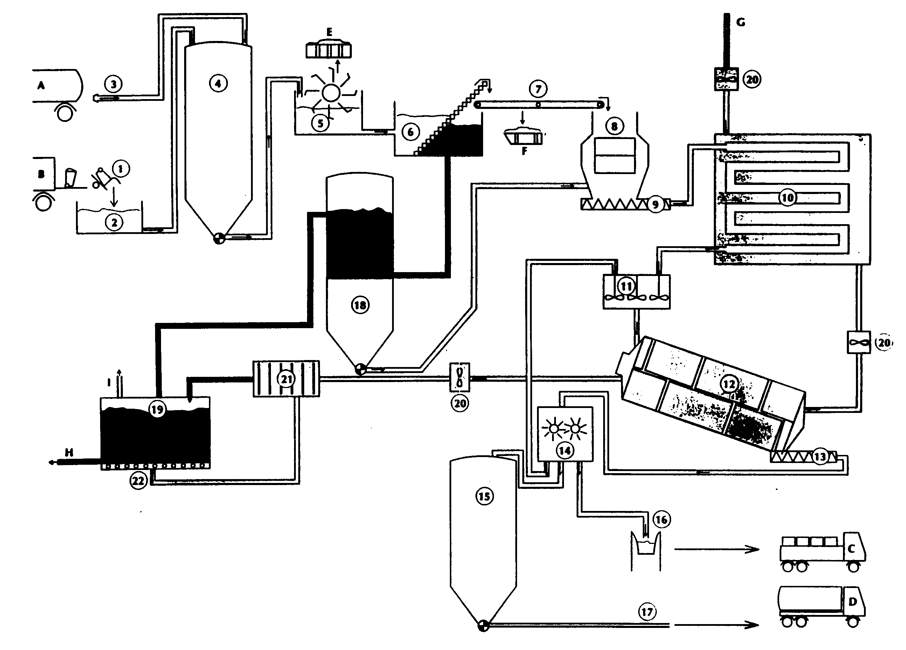

The invention will now be further elucidated with reference to the drawing of one single figure showing a schematic diagram of the apparatus according to the invention.

Reference numbers 1, 2 and 3 indicate a loading station where wet organic waste is delivered in bulk by a lorry A or in containers by a lorry B, the delivered swill is emptied by tipping 1 it into a receptacle 2. The swill which is delivered in bulk at pipe 3, respectively which is emptied into receptacle 2, feeds a storage silo 4 from which the swill is conducted to a bulk-waste separator 5. In this bulk waste separator 5 the large pieces of paper, carton and/or plastic are removed with the aid of schematically indicated rotating shafts with hooks. These hooks are cleaned continuously. From this bulk-waste separator the swill is conducted to a pre-dewatering device 6. A variety of installations may be used for this purpose. Shown is the application of a step-screen dewatering device, comprising a plurality of vertical strips in a step-like arrangement. The steps between the strips move independently of each other in a rotating upward movement. By this movement the solid components are pushed upward out of the swill. The liquid drains away via the openings between the strips under the influence of gravity and collects in the bottom of the pre-dewatering device 6. The liquid just mentioned which still comprises approximately 10-15% dry matter, is conducted to a pre-settlement tank 18, to allow the dry matter to settle for further treatment in the apparatus, as well as to obtain a rest fraction of waste water. This will be further elucidated below.

The slurry obtained in the dewatering device 6 has a dry matter content of approximately 25-30% and is first transported over a conveyor belt 7 where by means of a magnet magnetizable metals are removed from the slurry to be discharged via container F. By means of the conveyor belt 7 the slurry is transported to an extender 8 in order to bring about homogenization. The sediment becoming available in the settlement tank 18 is also conducted to the extender 8 for mixing with the main stream which is conducted from the dewatering device 6 via the conveyor belt 7 into the extender 8 to be processed in the sterilization apparatus. With the aid of a monopump 9 the homogenized slurry is pressed from the extender 8 into a sterilization apparatus 10 which at its efflux side is provided with an adjustable valve whose feed-through aperture is controlled in accordance with one or more pressure recorders measuring the pressure in the pipe system which is part of the sterilization apparatus 10.

Said pipe system is surrounded by a second pipe with a larger diameter (not shown) which, together with the pipe conducting the purified and dewatered wastes, forms an enclosed space. Through this space a heat-containing medium may be conducted, for instance, steam, for heating the wastes conducted through the pipe system. The pipe system is dimensioned such and the steam supply is regulated such that the mass in the pipes is heated to a temperature of above 100°C, for instance, by raising said temperature for 20 minutes to 133°C. By means of the adjusted valve at the efflux side of the sterilization apparatus 10, a constant pressure of approximately 3 bars is maintained in the pipe through which the wastes are conducted. In order to obtain a reliable sterilization and a usable product quality, the moisture content of the dewatered waste streams in the sterilization apparatus 10 should be at least 50%.

The sterilization apparatus 10 supplies a mixer 11 whose function will be explained below. The mixer 11 supplies a dehydration device 12 which in the case shown is a jacket-heated paddle dryer. This dryer comprises a rotating shaft with paddles attached to it which spread the material obtained from the mixer 11 over the wall of the dryer. A scraper (not shown) which is also attached to the shaft regularly removes the material from the wall. A heated air current is maintained flowing in a direction opposite to that of the material passing through the dryer. The rate of the air current is at least approximately 5 m/sec., and the temperature of this air current should be approximately 40-70°C. Reference number 13 indicates the efflux side of the dried product from the dehydration device 12. The material, which at that moment is somewhat flaky may, as in the configuration shown, be conducted to a grinder or, as the case may be, to a pelletizer 14 in order to become pulverized or pelletized.

On leaving the dehydration device 12, the material preferably has a dry matter content of 75-90% and is then suitable to be transported via a filling unit 16 for large sacks, or via a storage silo 15 via a filling unit 17 for bulk transport. About 50% of the processed material coming from the grinder or the pelletizer 14 is recirculated to the mixer 11 to adjust the dry matter content therein to at least about 45-50% in order to suitably feed the paddle dryer 12. In this manner a suboptimal phase in the dehydration process is omitted. The dehydration process from 25% to 45% dry matter progresses very slowly, probably because a fatty layer is formed at the surface of the sticky mass, hindering the evaporation of water. At a dry matter content of above 50%, the mass ruptures ever more easily. On the constantly rupturing surface, the fat is now prevented from forming a continuous evaporation barrier.

On entry, the air flow which is conducted through the dehydration device has a relative humidity of approximately 5% and on leaving it has a relative humidity of approximately 20-30%. Depending on the temperature of the entering air flow, the air flow's temperature is at the exit side about 28-50°C. The moisture present in the air flow is separated by means of a condenser 21 and conducted to a waste-water purifier 19, the dehydrated air being employed to aerate the waste water, so that possible odour particles are absorbed by the water. The waste-water purifier 19 is also fed with waste water from the pre-sedimentation tank 18. The water purified in the waste-water purifier 19 is suitable - optionally after the removal of excess floating matter - for discharge into the sewer. The air, free of annoying odours, may be released into the atmosphere.

The above-discussed method and apparatus for converting wet organic wastes into animal feed relates to a preferred embodiment according to the invention, while it should be clear, however, that without departing from the concept of the invention there are many possible variations, all within the scope of protection of the present invention as specified in the appended claims.

## Claims

1. A method of converting wet organic wastes into animal feed, in which the wastes are subjected to the following treatment:
- at least partial dewatering of the wastes to a moisture content of at least about 50%,
- sterilization of the dewatered wastes by means of heating the wastes to a temperature above 100°C,
- dehydration of the sterilized and at least partially dewatered wastes,
**characterized** in that during sterilization the wastes are heated for at least about 10 minutes to at least 125°C.

2. A method according to claim 1, **characterized** in that dewatering of the wastes is carried out in a dewatering device of the step-screen kind.

3. A method according to claim 1 or 2, **characterized** in that the sterilized and at least partially dewatered wastes are dehydrated until said wastes have a dry-matter content of about 75-90%.

4. An apparatus for the conversion of wet organic wastes into animal feed which comprises, in the order of the processing steps to which the wastes are subjected, a dewatering device, a sterilization device and a dehydration device, **characterized** in that the dehydration device is a jacket-heated paddle dryer in which a heated air current is maintained during operation.

5. An apparatus according to claim 4, **characterized** in that during operation preheated air is introduced into the dehydration device, said preheated air being obtained from a closed space accommodating the sterilization apparatus.

6. An apparatus according to claim 4 or 5, **characterized** in that the dehydration device in operation is fed with a mixture of wastes from the sterilization apparatus and a return stream from the dehydration device, formed by a fraction of the discharge from the dehydration device.

7. An apparatus according to claim 6, **characterized** in that the mixture fed to the dehydration device has an approximate dry matter content of at least 45-50%.

8. An apparatus according to any one of the claims 4-7, **characterized** in that the sterilization apparatus comprises a jacketed pipe, that the pipe is receivingly coupled with the dewatering device, and that during operation a heat-containing medium is conducted between the pipe and the surrounding jacket.

9. An apparatus according to claim 8, **characterized** in that the heat-containing medium is steam.

10. An apparatus according to claim 8 or 9, **characterized** in that the sterilization apparatus is provided with a controlled efflux device for supplying the wastes processed in the sterilization apparatus to the dehydration device.
